# EUROPEAN PATENT SPECIFICATION

(11) **EP 3 907 190 B1**
(45) Date of publication and mention of the grant of the patent: **28.06.2023**
(21) Application number: 21171783.0
(22) Date of filing: 03.05.2021
(51) Int. Cl.: C02F 1/00, B01D 33/04, C02F 103/18, C02F 103/00, C02F 11/126, C02F 11/123, B01D 33/00, B01D 33/46, B01D 53/50, B01D 33/044, B01D 33/41, B01D 29/09, B01D 29/56, B01D 29/64

(54) **METHOD AND PLANT FOR REMOVING MICROPLASTIC MATERIAL FROM BACKWASH WATERS**
VERFAHREN UND ANLAGE ZUR ENTFERNUNG VON MIKROPLASTISCHEM MATERIAL AUS RÜCKSPÜLWASSER
PROCÉDÉ ET INSTALLATION PERMETTANT D'ÉLIMINER LES MATIÈRES MICROPLASTIQUES DES EAUX DE LAVAGE À CONTRE-COURANT

(30) Priority: 04.05.2020 IT 202000009781
(43) Date of publication of application: 10.11.2021
(73) Proprietor: Grimaldi Euromed S.p.A., 90139 Palermo (IT)
(72) Inventor: BOCCHETTI, Dario, 80127 Napoli (IT); DI NATALE, Francesco, 80078 Pozzuoli (NA) (IT); PORTOLANO, Alberto, 80122 Napoli (IT)
(74) Representative: De Gregori, Antonella

(56) References cited:
- WO-A1-2018/170081
- CN-A- 109 331 527
- CN-U- 207 591 434
- US-A1- 2014 060 323

## Description

The present invention describes a method for removing microplastic material from seawater and the relative plant.

More precisely, the present invention falls within the field of the methods/systems directed to remove or decrease the amount of microplastic material present in the waters of seas and oceans.

The problem concerning the presence of microplastic material in the waters of the seas and oceans has been strongly felt by public opinion and national and international institutions for several years now, with a particularly significant impact on the health of animals and humans.

Plastics are materials that are used extensively throughout the world. Not only because it makes life easier in a number of ways, but because it is very often lighter or less expensive than alternative materials. However, if it is not disposed of or recycled properly, it is released into the environment where it can persist for long periods and break down into smaller and smaller fragments, known as microplastic material.

Microplastic material is in fact a collection of extremely small solid particles (usually less than 5 mm in size) composed of mixtures of polymers (the main components of plastics) and of functional additives. These particles may also contain residual impurities from production sites. Microplastic material may be formed accidentally as a result of wear and deterioration of larger plastic fragments, or they may be intentionally manufactured and added to certain products for a specific purpose, for example as exfoliating granules in homonymous body and facial preparations.

Depending on its origin, microplastic material can then be divided into two main categories: primary microplastic material which is released directly into the environment in the form of small particles and can derive from, for example, washing synthetic garments, tyre abrasion while driving, microplastic material intentionally added in body care products, and secondary microplastic material which is produced as a result of the degradation of larger plastic objects, such as plastic bags, plastic bottles or fishing nets.

The plastics found in the largest quantities in seawater are polyethylene terephthalate (PET), polyamide and polycarbonates, the most common materials used to make consumer products such as disposable bottles and containers. Unfortunately, as mentioned, a high percentage of the plastics used in the world is not disposed of properly (and this happens even in the most careful countries sensitive to environmental issues) and this material not properly disposed of starts its journey to the sea that degrades it into smaller and smaller pieces, until it becomes microplastic material that becomes food that humans eat.

The amounts of microplastic material in the oceans are increasing. In 2017, the UN stated that there are 51 thousand billion microplastic material particles in the seas. Once released into the environment, microplastic material accumulates in animals, including fish and shellfish, and is consequently also consumed as food by humans. Plastics therefore enter the human food chain through food and water and the effects on health are still unknown, but plastics, as well as the additives they contain, such as stabilizing or flame-retardant agents, and other possible toxic chemicals can be/are harmful to animals and humans who ingest them.

Therefore, as a result of growing concerns about both the environment and animal and human health, several EU Member States have already enacted or proposed national bans on the intentional use of microplastic material in certain consumer products, for example, on the use in the form of microgranules in cosmetic rinseoff products where microplastic material particles act as abrasion and polishing agents or on the use of disposable plastic products (plates, cups, etc.). It will take many years before all countries adapt to more restrictive rules and many years before the first benefits of such more restrictive regulations already implemented by many countries can be felt.

In the meantime, the problem of eliminating the aforementioned microplastic material from the waters of the sea is therefore particularly felt, and numerous attempts have been made in this direction by applying solutions of various kinds. For example, in WO2019166442, a method for removing microplastic material from seawater that requires the use of compounds such as alkyltrichlorosilanes and/or silsesquioxanes is described.

The Chinese utility model CN207591434 (U) discloses a device which is able to remove microplastic particles in the water body of a mariculture workshop comprising a filter box and a filter box mouth cover. The filter box is provided with water inlets and water outlets communicating with its cavity. A pretreatment module and a microplastic removal module are arranged in series in the cavity of the filter box. The pretreatment module includes a coarse filter, a biochemical cotton filter, porous ceramsite filter, activated carbon filter, while the microplastic removal module includes a series of fine filters.

The patent application WO2018170081 (A1) discloses a system for treating exhaust gasses of a marine vessel involving (a) a wet scrubber configured for receiving the exhaust gasses and washwater and scrubbing the exhaust gasses using the washwater to produce scrubbed exhaust gasses and contaminated washwater; and (b) a pressure filter system fluidly coupled to the wet scrubber to receive the contaminated washwater, the pressure filter system including a filter media and being configured to deliver the contaminated washwater through the filter media under pressure to filter contaminants from the contaminated washwater and produce a clean washwater filtrate.

In US2014060323 (A1) a system and method for efficient removal of sulfur oxides (SOx), nitrogen oxides (NOx) and particulate matter (PM) contained in an exhaust gas generated from fuel combustion and efficient treatment of water containing microorganisms (e.g. ballast water) is described. Said process for removal of sulphur oxides from exhaust gas comprises the steps of: (a) providing a seawater; (b) enhancing a SOx adsorption capacity of the seawater to pre-determined levels by controlled dosing with at least one alkaline additive substances introduced from a storage of fresh alkaline additive onboard, and/or an alkaline solution produced from the cathode side of an electrochemical cell and/or their combination thereof to form an alkaline seawater with a pH ranging from 8 to 12; and (c) contacting an exhaust gas with the alkaline seawater as a scrubbing agent, to produce an exhaust with reduced content of sulphur oxides and a used scrubbing agent.

There are also known microplastic material removal methods that are conducted with surface nets, which are not particularly efficient in terms of the amount of microplastic material collected.

The present invention proposes to identify a method and a plant for removing microplastic material from seawaters, which is particularly efficient, energetically advantageous, and which does not require the use of chemical compounds which may in turn represent an additional source of pollution.

To further clarify the meaning of the various terms used in this description, the following definitions are given:
- exhaust gas treatment system means a system capable of abating SOx emissions produced by the combustion of an endothermic engine, also identified by the abbreviation EGCS;
- static filter means an element for filtering seawater before it is sucked up by the pumps of a plant on board ship;
- dynamic filtering means or dynamic filtration means refer to a device suitable for filtering seawater coming from the pumps of an EGCS system in order to prevent clogging of spray nozzles.

In particular, on board ships there are plants for the treatment of exhaust gas emissions (in particular sulphur oxides) from propulsion engines: these plants, known as scrubbers, have the purpose of desulphurising exhaust gases. These plants, in the open-loop operating mode, use seawater, about 45 tons/MWh, to abate the sulphur in special spray towers.

On the inlet line to the scrubber plant, from the sea intakes up to the spray towers, there are filters of different sizes (MESH), operating with different technologies.

More precisely, at the level of the sea intake there is a first static filter with a mesh of the order of 5-6 mm which, through a coarse filtration, substantially eliminates only the organic material present in the seawater, sucked in by means of suction pumps, before the water reaches the pumps themselves. Seawater is sucked through such pumps with flow rates comprised between 225 and 720 m³/h, flow rates necessary for the treatment of up to 95% of the sulphur oxides produced by the combustion of a 4-stroke diesel engine with power comprised between 5 and 16 MW and, before being fed to the scrubber or exhaust gas spray tower, in order to protect the nozzles of said spray towers, the water coming from the pumps passes through a self-cleaning dynamic filtering means having a much smaller mesh than the static filter at the sea intake level, generally a mesh of the order of some tens of microns, for example comprised between 100 and 200 micrometres. By means of an automated discharge, the waters thus filtered are then fed to the nozzles of the spray tower/scrubber where the treatment, more precisely the desulphurisation, of the exhaust gases is carried out. The waters coming from the spray tower or scrubber, suitably treated to eliminate oils and metals, are then discharged into the sea. The material filtered by the water coming from the pumps accumulates on the surface of the dynamic filtering means, also forming coarse-sized floccules. It shall be periodically cleaned by backwashing with seawater or with water already filtered coming from the same dynamic filtering means and fed back to said dynamic filtering means by means of a backwash pump. The backwash waters of the dynamic filtering means are currently discharged into the sea without any special treatment.

It is an object of the present invention a method for removing microplastic material from backwash waters coming from dynamic filtering means, filtering the seawater to be fed to the exhaust gas treatment plants, in particular said exhaust gas being sulphur oxides, installed on board ships, said method being characterized by two filtration stages, wherein said first filtration stage removes microplastic material consisting of particles having a size greater than 2 mm and is conducted on backwash waters having a flow rate of less than 100 m³/h, preferably ranging from 10 to 30 m³/h, with a particulate content of microplastic material ranging from about 16 to about 400 mg/m³, and wherein said second filtration stage removes microplastic material consisting of particles having a size greater than 50 micrometres and is conducted on filtered waters coming from the first filtration stage.

In this respect, it should also be clarified that backwashing of dynamic filtering means is conducted for a certain time interval, from 5 to 10 minutes per hour on average, and therefore the flow rate of the backwash waters represents a much smaller volume than the volume of the waters filtered by dynamic filtering means placed on the discharge line of exhaust gas treatment plants.

For example, if the dynamic filtering means operates at 450 m³/h for 1 hour, the backwash will operate between 13.5 and 27 m³/h, indicatively for 10 minutes every hour.

So, for example, if the volume of the waters filtered by the dynamic filtering means is equal to 450 m³, the volume of the backwash waters will range between 2.25 and 4.5 m³. The ratio between the volumes of backwash waters and filtration waters is generally comprised between 0.6% and 1.2%.

The much lower flow rates of the backwash allow the use of much better performing filters for the backwash, as the low flow rates result in reduced energy consumption of the pumps, at the expense of higher pressure drops.

The backwash water stream is therefore much more concentrated than the stream fed to the dynamic filtration means, because, as previously noted, it is characterized by lower volumes. In the light of the ratio of backwash volumes to filtration volumes, the concentration of microplastic material in the backwash waters is between about 80 and 200 times higher than the concentration in the filtration waters. A clarification process is therefore carried out.

Backwash waters coming from the dynamic filtering means are therefore waters containing microplastic material in higher concentrations because they contain the microplastic material present in the seawater when the backwash waters are directly taken from the sea intakes in order to be used in the backwash, as well as especially the microplastic material that the backwash waters remove from the dynamic filtering means on the discharge line of the exhaust gas treatment plants installed on board ship, where they were deposited by filtering the waters fed to the nozzles of the treatment tower.

The higher concentration allows for a much more effective sifting of microplastic material that is otherwise present in extremely small amounts.

By way of example, based on tests conducted by the Applicant, there is an average microplastic material content in the waters sent to the dynamic filtration media equal to 1.26 objects/m³, whereas in the backwash waters, the microplastic material content is indicatively comprised between 105 and 210.4 objects/m³.

On the other hand, with reference to the mass of microplastic material, considering an average literature value of between 0.2 and 2 mg/m³, there is a particulate content in backwash waters of between about 16 and 400 mg/m³.

The removal method according to the present invention consists of a first filtration stage that removes microplastic material consisting of particles having a size greater than 2 mm, with a filter having a MESH or 2000 micrometre mesh, preferably particles having a size of 1-2 mm with a filter having a MESH or 500 micrometre mesh, and of a second filtration stage removing microplastic material consisting of particles having a size greater than 50 micrometres, with a filter having a MESH or 50 micron mesh, preferably of particles having a size greater than 25 microns with a filter having a MESH or 25 micron mesh, even more of preferably particles having a size greater than 10 microns with a filter having a MESH or 10 micron mesh.

In accordance with a second aspect, the present invention also relates to a plant comprising, arranged in parallel, an exhaust gas treatment system and a system for removing microplastic material, wherein said exhaust gas treatment system comprises a dynamic filtering means adapted to protect the nozzles of a spray tower, said dynamic filtering means being connected to the system for removing microplastic material, said connection being adapted to feed the backwash waters coming from the dynamic filtering means to a distributor element of the system for removing microplastic material, adapted to distribute incoming backwash waters over the entire surface of a first filtering element of the system for removing microplastic material, said first filtering element having a MESH from 500 to 2000 microns, adapted to remove microplastic material consisting of particles having a size greater than 1-2 mm depending on the mesh of the first filtering element, said first filtering element being positioned in series with respect to a second filtering element to which it feeds the filtered waters, said second filtering element having a Mesh from 10 to 50 microns, preferably from 10 to 25 microns, adapted to remove microplastic material consisting of particles having a size greater than 10-50 microns, depending on the mesh of the second filtering element, said second filtering element being connected to an outlet conduit of the filtered waters, possibly in presence of a suction vacuum pump.

The present invention in at least one of the aforesaid aspects may have at least one of the following preferred features; the latter may in particular be combined with one another as desired in order to meet specific application needs.

More precisely, the connection between the exhaust gas treatment system and the microplastic material removal system can be a direct connection via one or more conduits or at least one inlet conduit of the microplastic material removal system according to the invention is positioned downstream of and connected to an outlet conduit of the exhaust gas treatment system, wherein said outlet conduit being adapted to convey backwash waters coming from the dynamic filtering means of the exhaust gas treatment system to the inlet conduit.

Preferably, the first filtering element of the system for removing microplastic material consists of a metallic or polymeric roller mesh, more preferably provided with self-cleaning vacuum brush systems, connected to collection bags. Preferably, the second filtering element of the system for removing microplastic material consists of a roller filter of polymeric material, under vacuum, connected to collection bags.

This second filtering element also comprises cleaning systems through rollers or brushes.

The first filtering element of the system for removing microplastic material is a linear belt filter (filtering belt) and is periodically set in motion through one of the two side rollers, connected to a motor. During this movement of the filtering belt, a scraper blade or a series of brushes in contact with the belt will remove the sludge and the coarse material accumulated on the surface. This first filtering element will eliminate the bulk of the material, often agglomerated, by accumulating it in a collection bag or external container.

Even when the polymeric material of the second filtering element (e.g., polypropylene) is saturated with microplastic material particles, these precipitate into a corresponding collection bag. The filter is in fact provide with a differential pressure meter placed between the upstream and downstream of this polymeric filter: the achievement of a certain critical value, specific to each filter and to the operation of the vacuum pump, indicates that the filter has become covered with too many microplastic material particles and biological residues, it no longer operates optimally and must be changed. Then, by means of a motor connected to one of the rollers, the filter is advanced until a new clean filtering surface is presented. Such filter advancement may alternatively occur at a predetermined time.

The "exhausted" portion of the filter, before passing through the rollers, is brushed to remove the sludge deposited on its surface (i.e. microplastic material and biological residues) which are dropped into a collection bag.

This cleaning to remove the sludge can be carried out, as mentioned, by means of brushes or string discharge rollers, possibly perforated and with injection of compressed air, which push the sludge out of the filter and allow it to accumulate in the collection bag.

The material deposited on the second filtering element is evidently present in smaller quantities than the material deposited on the first filtering element, i.e. the layer of sludge deposited will be on average lower, by a few millimetres, and therefore more efficient belt cleaning systems are preferred, such as string discharge rollers, possibly perforated and with injection of compressed air, to obtain a filtration cake as dry as possible.

This second filtering element can also retain microdroplets of oil, ensuring a further "purifying" effect of the seawater.

A suitable vacuum circuit ensures the operation of the second filtering element of the system according to the present invention.

In principle, a filter can also be reused. It is considered that the filter can be used as long as the pressure drop of the cleaned filter is less than 80% of the maximum pressure drop. Depending on the characteristics of the exhausted filter, it is still possible to check whether it can be reused or not.

The method and the plant according to the present invention provide a number of particularly important advantages:
- backwash waters coming from the dynamic filtering means on the discharge line of the exhaust gas treatment plants installed on board ship, instead of being discharged into the sea without any type of treatment, are suitably treated to remove microplastic material and then discharged free of microplastic material with obvious advantages from an ecological and health point of view for humans and animals;
- backwash waters coming from the dynamic filtering means are waters containing microplastic material in higher concentrations because they contain both the microplastic material present in the seawater when it is sucked up to be used in the backwash of the dynamic filtering means and the microplastic material that such backwash waters removes from the dynamic filtering means on the discharge line of the exhaust gas treatment plants installed on board ship, where they are deposited as a result of the filtration of the waters to be fed to the nozzles of the treatment tower;
- this waste material is treated and transformed into microplastic material-free waters ready to be discharged into the sea, in a simple and above all energy-efficient way;
- the method allows to filter very diluted liquids, in a very wide range of density and sedimentability of the material;
- compared to the use of, for example, centrifuges, the process is characterised by a higher efficiency and lower energy consumption;
- the availability of a wide range of filtering materials also allows the process to be adapted to different operating conditions. As indicated above, it is also possible, for example, to obtain a simultaneous removal of suspended oil microdroplets by using suitably surface functionalized filters;
- furthermore, the method and the plant according to the present invention start from a filtration and backwashing system already present and active on the ship: considering a backwashing pump operating with an operating pressure of 3.5 bar, and considering the need for a vacuum pump for the polymeric filter operating with a depression of 500-600 mmHg, the plant according to the present invention requires an energy consumption between 20 and 40% of the energy consumed by the backwashing pump. This additional energy consumption is equal to an additional cost comprised between 0.7 to 1.5% compared to the cost of filtering water fed to the dynamic filtering means of the scrubber. This is therefore an extremely small value compared to the very significant environmental benefit of removing microplastic material.

Further features and advantages of the present invention will best result from the following detailed description made with reference to the appended figures.

In such figures,
- figure 1 is representative of an embodiment of the system for removing microplastic material from backwash waters coming from dynamic filtration means, i.e. from dynamic filtration means of exhaust gas treatment plants, according to the present invention;
- figure 2 is representative of a second embodiment of the system for removing microplastic material from backwash waters coming from dynamic filtration means, i.e. from dynamic filtration means of exhaust gas treatment plants, according to the present invention;
- figure 3 is representative of a second embodiment of the system for removing microplastic material from backwash waters coming from dynamic filtration means, that is dynamic filtration means of exhaust gas treatment plants, according to the present invention, which differs from the previous one in the presence of string discharge rollers instead of brushes on the second filtering element;
- figure 4 represents a block diagram of a plant comprising an exhaust gas treatment system and a system for removing microplastic material, according to the present invention.

For the illustration of the drawings, use is made in the following description of identical numerals to indicate construction elements with the same function. Further, for illustration clarity, some numerical references may not be repeated in all the figures.

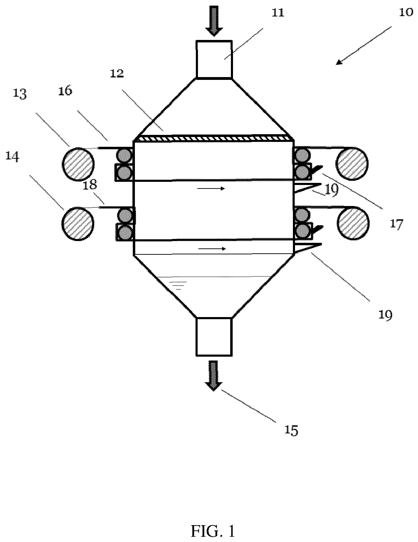

With reference to Figure 1, a system for removing microplastic material from backwash waters coming from dynamic filtration means of exhaust gas treatment plants is shown, overall indicated by 10.

The system 10 comprises an inlet conduit 11 for feeding the backwash waters connecting the dynamic filtering means, i.e. dynamic filtering means of said exhaust gas treatment plants (not shown in figure 1), with a distributor element 12 distributing the backwash waters entering the system 10, over the entire surface of the first filtering element 13, positioned in series with respect to the second filtering element 14, which in turn is connected to an outlet conduit 15 of the filtered waters. More precisely, the backwash waters are fed to the system 10 through the inlet conduit 11 and move in the system 10 according to the direction indicated by the vertical arrows of figure 1, said conduit 11 being positioned downstream of and connected to an outlet conduit of the backwash waters coming from dynamic filtration means of exhaust gas treatment plants (not shown in the figure).

The terms "upstream" and "downstream" refer to the direction of movement of the backwash waters.

By means of said inlet conduit 11, the incoming backwash waters, via the distributor element 12, are distributed over the entire surface of the filtering element 13 which removes the microplastic material consisting of particles having a size greater than 1-2 mm, depending on the mesh of the first filtering element 13, by filtration and obtains a stream of filtered water, free of said microplastic material.

By way of example, such a distributor element (12) may be a perforated plate or side weir element.

The filtering element 13 may comprise a metallic or polymeric roller mesh 16, more preferably provided with self-cleaning vacuum brush systems 17, connected to collection bags 19.

The stream of filtered water, coming from the filtering element 13 is fed to the filtering element 14 which removes microplastic material consisting of particles having a size from 10 to 50 microns, depending on the mesh of the second filtering element 14, again by filtration.

The filtering element 14 may comprise a roller filter of polymeric material 18, connected to collection bags 19, wherein brushes 17 drop sludge removed from the surface of the filter 18.

The stream of filtered water coming from the filtering element 14 is fed to an outlet conduit 15, through which the filtered waters can then be removed from the system 10 and discharged into the sea, free of microplastic material with obvious advantages from an ecological point of view and the health of animals and humans. Said filtering elements 13 and 14 move according to the direction indicated by the horizontal arrows in figure 1.

In addition to the embodiments described above, a system for removing microplastic material thus conceived is susceptible to modifications and variations, all of which are within the scope of the invention as defined in the appended claims; moreover, all details are substitutable by technically equivalent elements within the scope of the appended claims.

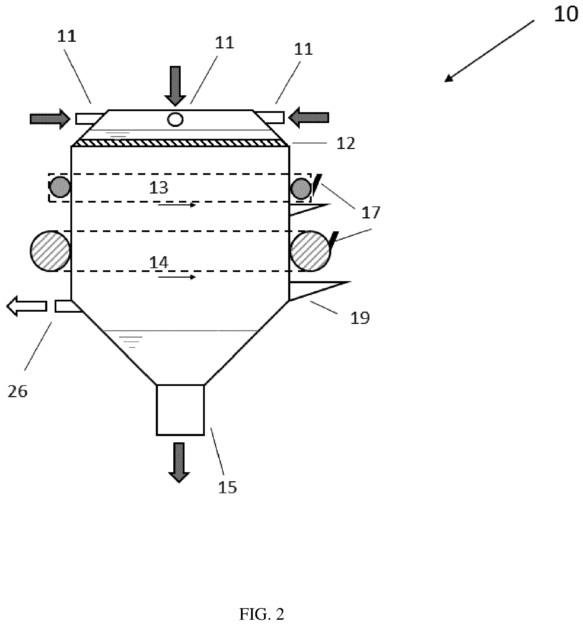

With reference to Figure 2, a system for removing microplastic material from backwash waters coming from dynamic filtration means of exhaust gas treatment plants, collectively denoted by 10, is shown according to a different embodiment, wherein the system 10 comprises multiple inlet conduits 11 for feeding backwash waters. By means of said inlet conduits 11, which connect the dynamic filtering means of said exhaust gas treatment plants (not shown in figure 1), the backwash waters are fed to a distributor element 12 which distributes them to the inlet of the system 10, over the entire surface of the first filtering element 13, positioned in series with respect to the second filtering element 14, which is in turn connected to an outlet conduit 15 of the filtered waters. In such an embodiment, a vacuum suction pump (26) is present.

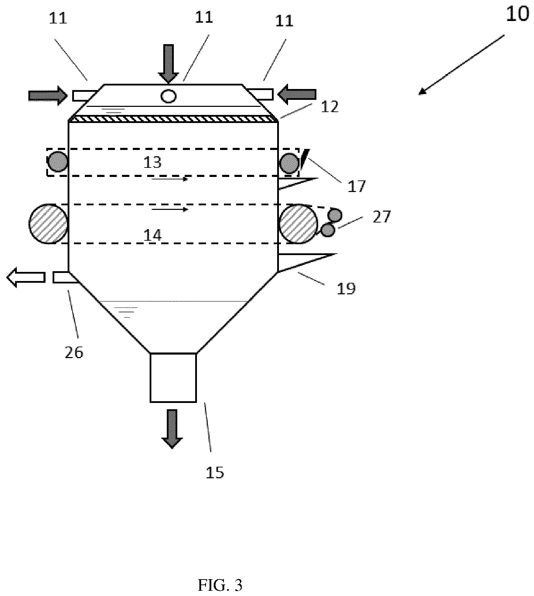

With reference to figure 3, a system for removing microplastic material from backwash waters is shown which is completely analogous to that of figure 2, with the only difference that the brushes (17) provided for removing the sludge deposited on the filtering element (14) are replaced by string discharge rollers (27).

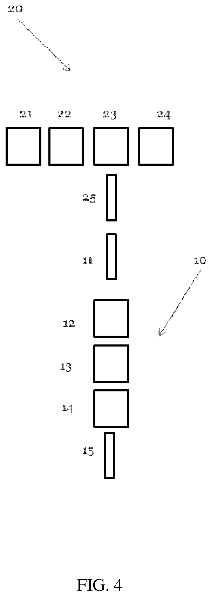

A block diagram of a plant comprising an exhaust gas treatment system 20 and a microplastic material removal system 10 is shown in Figure 4. The block diagram portion relating to the exhaust gas treatment system 20 includes an element 21, consisting of a first static filter that substantially eliminates only organic material from the seawaters sucked in by suitable suction pumps, indicated by 22. Seawater is sucked through such pumps 22 and passes through a dynamic filtering means 23. The waters thus filtered are then fed to the nozzles of the spray tower/scrubber 24 where the treatment, more precisely the desulphurisation, of the exhaust gases is carried out. The waters coming from the spray tower or scrubber, suitably treated to eliminate oils and metals, are then discharged into the sea. The dynamic filtering means 23 are periodically cleaned by backwashing with seawater or by recycling a portion of already filtered water fed to the spray tower/scrubber. The backwash waters of the dynamic filtering means 23 are fed through a conduit 24 to the feed conduit 11 of the microplastic material removal system 10, where they are treated as indicated above, before being discharged into the sea.

From the above description the features of the method/plant object of the present invention, as well as the advantages thereof, are evident.

In particular, it was verified through a number of measurements conducted on samples of backwash waters coming from the dynamic filtering means of the exhaust gas treatment system on the Cruise Roma ship along the routes:
- Civitavecchia-Barcellona
- Barcellona-Porto Torres
- Porto Torres-Civitavecchia,
that these backwash waters were characterised by containing high amounts of microplastic material, substantially unchanged with respect to the waters directly taken from the sea, which were only deprived of organic material with size larger than 5 mm, through the static filter (algae, fish, etc.). Said backwash waters were then fed to the microplastic material removal system according to the present invention, leading to obtaining waters to be discharged into the sea substantially free of microplastic material having a size greater than 25 µm, with the removal therefore of a microplastic particulate content ranging from about 16 to about 400 mg/m³, and constituting substantially the totality of the microplastic material present in the waters.

The method plant according to the present invention therefore allows to achieve the removal of microplastic material from the waters of the sea in an energetically very advantageous way, also obtaining a very important result from an ecological point of view and for the health of animals and human beings.

## Claims

1. Method for removing microplastic material from backwash waters coming from dynamic filtering means (23), filtering the seawater to be fed to the exhaust gas treatment plants (20), in particular said exhaust gas being sulphur oxides, installed on board ships, said method being **characterized by** two filtration stages, wherein said first filtration stage removes microplastic material consisting of particles having a size greater than 2 mm and is conducted on backwash waters having a flow rate of less than 100 m³/h, preferably ranging from 10 to 30 m³/h, with a particulate content of microplastic material ranging from about 16 to about 400 mg/m³, and wherein said second filtration stage removes microplastic material consisting of particles having a size greater than 50 micrometres and is conducted on filtered waters coming from the first filtration stage.

2. Method according to claim 1, wherein said first filtration stage removes microplastic material consisting of particles having a size greater than 2 mm, with a filter having 2000 micrometre mesh filter, preferably particles having a size of 1-2 mm with a filter having a 500 micrometre mesh filter, and a second filtration stage removing microplastic material consisting of particles having a size greater than 50 micrometres, with a filter having a 50 micron mesh filter, preferably particles having a size greater than 25 microns with a filter having a 25 micron mesh filter, even more preferably particles having a size greater than 10 microns with a filter having a 10 micron mesh filter.

3. Plant comprising, arranged in parallel, an exhaust gas treatment system (20) and a system for removing microplastic material (10), wherein said exhaust gas treatment system (20) comprises a spray tower, dynamic filtering means (23) adapted to protect the nozzles of the spray tower, filtering the seawater to be fed to the nozzles of the spray tower, said dynamic filtering means (23) being connected to the system (10) for removing microplastic material, said connection being adapted to feed the backwash waters coming from the dynamic filtering means (23) to a distributor element (12) of the system (10) for removing microplastic material, adapted to distribute incoming backwash waters over the entire surface of a first filtering element (13) of the system (10), said first filtering element (13) having a mesh from 500 to 2000 microns, adapted to remove microplastic material consisting of particles having a size greater than 1-2 mm depending on the mesh of said first filtering element (13), said first filtering element (13) being positioned in series with respect to a second filtering element (14) to which it feeds the filtered waters, said second filtering element (14) having a mesh from 10 to 50 microns, preferably from 10 to 25 microns, adapted to remove microplastic material consisting of particles having a size greater than 10-50 microns, depending on the mesh of the second filtering element (14), said second filtering element (14) being connected to an outlet conduit (15) of the filtered waters, possibly in presence of a suction vacuum pump (26).

4. Plant according to claim 3, wherein the connection between the exhaust gas treatment system (20) and the microplastic material removal system (10) is a direct connection via one or more conduits or wherein at least one inlet conduit (11) of the microplastic material removal system (10) is positioned downstream of and connected to an outlet conduit (25) of the exhaust gas treatment system (20), said outlet conduit (25) being adapted to convey backwash waters coming from the dynamic filtering means (24) of the exhaust gas treatment system (20) to said inlet conduit (11).

5. Plant according to claim 3, wherein said first filtering element (13) comprises a metallic or polymeric roller mesh (16), more preferably provided with self-cleaning vacuum brush systems (17), connected to collection bags (19).

6. Plant according to any one of claims 3 to 5, wherein said second filtering element (14) consists of a roller filter (18) of polymeric material, under vacuum, connected to collection bags (19).

7. Plant according to any one of claims 3 to 6, wherein said second filtering element (14) comprises cleaning systems through brushes or rollers, possibly perforated and with compressed air injection.

## Patentansprüche

1. Verfahren zum Entfernen Mikroplastikmaterial aus Rückspülwässern, die aus dynamischen Filtermitteln (23) kommen, die das Meerwasser filtern, das den Abgasbehandlungsanlagen (20) zugeführt werden soll, wobei es sich bei dem Abgas insbesondere um Schwefeloxide handelt, die an Bord von Schiffen installiert sind, wobei das Verfahren durch zwei Filtrationsstufen gekennzeichnet ist, wobei die erste Filtrationsstufe Mikroplastikmaterial entfernt, das aus Partikeln mit einer Größe von mehr als 2 mm besteht, und mit Rückspülwässern, die eine Durchflussrate von weniger als 100 m³/h aufweisen, vorzugsweise im Bereich von 10 bis 30 m³/h, mit einem Partikelgehalt an Mikroplastikmaterial im Bereich von etwa 16 bis etwa 400 mg/m³ durchgeführt wird, und wobei die zweite Filtrationsstufe Mikroplastikmaterial entfernt, das aus Partikeln mit einer Größe von mehr als 50 Mikrometern besteht, und mit gefiltertem Wasser durchgeführt wird, das aus der ersten Filtrationsstufe kommt.

2. Verfahren nach Anspruch 1, wobei die erste Filtrationsstufe Mikroplastikmaterial entfernt, das aus Partikeln mit einer Größe von mehr als 2 mm besteht, mit einem Filter mit 2000 Mikrometer Maschenfilter, vorzugsweise Partikeln mit einer Größe von 1 bis 2 mm mit einem Filter mit einem 500 Mikrometer Maschenfilter, und eine zweite Filtrationsstufe, die Mikroplastikmaterial entfernt, das aus Partikeln mit einer Größe von mehr als 50 Mikrometern besteht, mit einem Filter mit einem 50-Mikron Maschenfilter, vorzugsweise aus Partikeln mit einer Größe von mehr als 25 Mikron mit einem Filter mit einem 25-Mikron Maschenfilter, noch bevorzugter aus Partikeln mit einer Größe von mehr als 10 Mikron mit einem Filter mit einem 10-Mikron Maschenfilter.

3. Anlage, die ein parallel angeordnetes Abgasbehandlungssystem (20) und ein System zum Entfernen Mikroplastikmaterial (10) umfasst, wobei das Abgasbehandlungssystem (20) einen Sprühturm, dynamische Filtermittel (23) umfasst, die eingerichtet sind, die Düsen des Sprühturms zu schützen und das Meerwasser zu filtrieren, das den Düsen des Sprühturms zugeführt werden soll, wobei die dynamische Filtermittel (23) mit dem System (10) zum Entfernen Mikroplastikmaterial verbunden sind, wobei die Verbindung geeignet ist, das aus den dynamischen Filtermitteln (23) kommende Rückspülwasser einem Verteilerelement (12) des Systems (10) zum Entfernen von Mikroplastikmaterial zuzuführen, das eingerichtet ist, das ankommende Rückspülwasser über die gesamte Oberfläche eines ersten Filterelements (13) des Systems (10) zu verteilen, wobei das erste Filterelement (13) eine Masche von 500 bis 2000 Mikron aufweist und eingerichtet ist, Mikroplastikmaterial zu entfernen, das aus Partikeln mit einer Größe von mehr als 1 bis 2 mm in Abhängigkeit von der Masche des ersten Filterelements (13) besteht, wobei das erste Filterelement (13) in Bezug auf ein zweites Filterelement (14), dem es das gefilterte Wasser zuführt, in Reihe angeordnet ist, wobei das zweite Filterelement (14) eine Masche von 10 bis 50 Mikron, vorzugsweise von 10 bis 25 Mikron, aufweist, die eingerichtet ist, Mikroplastikmaterial zu entfernen, das aus Partikeln mit einer Größe von mehr als 10-50 Mikron in Abhängigkeit der Masche des zweiten Filterelements (14) besteht, wobei das zweite Filterelement (14) mit einer Auslassleitung (15) für das gefilterte Wasser verbunden ist, möglicherweise in Anwesenheit einer Saugvakuumpumpe (26).

4. Anlage nach Anspruch 3, wobei die Verbindung zwischen dem Abgasbehandlungssystem (20) und dem Mikroplastikmaterial-Entfernungssystem (10) eine direkte Verbindung über eine oder mehrere Leitungen ist oder wobei mindestens eine Einlassleitung (11) des Mikroplastikmaterial-Entfernungssystems (10) stromabwärts einer Auslassleitung (25) des Abgasbehandlungssystems (20) angeordnet ist und mit dieser verbunden ist, wobei die Auslassleitung (25) eingerichtet ist, Rückspülwasser, das aus den dynamischen Filtermitteln (24) des Abgasbehandlungssystems (20) kommt, zu der Einlassleitung (11) zu leiten.

5. Anlage nach Anspruch 3, wobei das erste Filterelement (13) eine metallische oder polymere Rollenmasche (16) umfasst, das bevorzugter mit selbstreinigenden Saugbürstensystemen (17) versehen ist, die mit Sammelsäcken (19) verbunden sind.

6. Anlage nach einem der Ansprüche 3 bis 5, wobei das zweite Filterelement (14) aus einem Rollenfilter (18) aus Polymerwerkstoff besteht, der unter Vakuum steht und mit Sammelsäcken (19) verbunden ist.

7. Anlage nach einem der Ansprüche 3 bis 6, **dadurch gekennzeichnet, dass** das zweite Filterelement (14) Reinigungssysteme durch Bürsten oder Walzen, eventuell perforiert und mit Drucklufteinspritzung, umfasst.

## Revendications

1. Procédé pour éliminer les matières microplastiques des eaux de lavage à contre-courant provenant de moyens de filtrage dynamique (23), filtrant l'eau de mer à alimenter aux installations de traitement des gaz d'échappement (20), en particulier lesdits gaz d'échappement étant des oxydes de soufre, installés à bord de navires, ledit procédé étant **caractérisé par** deux étapes de filtration, dans lequel ladite première étape de filtration élimine les matières microplastiques constituées de particules ayant une taille supérieure à 2 mm et est réalisée sur des eaux de lavage à contre-courant ayant un débit inférieur à 100 m³/h, de préférence compris entre 10 et 30 m³/h, avec une teneur en particules de matières microplastiques comprise entre environ 16 et environ 400 mg/m³, et dans lequel ladite seconde étape de filtration élimine les matières microplastiques constituées de particules ayant une taille supérieure à 50 micromètres et est réalisée sur des eaux filtrées provenant de la première étape de filtration.

2. Procédé selon la revendication 1, dans lequel ladite première étape de filtration élimine les matières microplastiques constituées de particules ayant une taille supérieure à 2 mm, avec un filtre ayant un filtre à mailles de 2000 micromètres, de préférence des particules ayant une taille de 1 à 2 mm avec un filtre ayant un filtre à mailles de 500 micromètres, et une seconde étape de filtration éliminant les matières microplastiques constituées de particules ayant une taille supérieure à 50 micromètres, avec un filtre ayant un filtre à mailles de 50 micromètres, de préférence des particules ayant une taille supérieure à 25 micromètres avec un filtre ayant un filtre à mailles de 25 micromètres, encore plus de préférence des particules ayant une taille supérieure à 10 micromètres avec un filtre ayant un filtre à mailles de 10 micromètres.

3. Installation comprenant, disposés en parallèle, un système de traitement des gaz d'échappement (20) et un système d'élimination des matières microplastiques (10), dans laquelle ledit système de traitement des gaz d'échappement (20) comprend une tour de pulvérisation, des moyens de filtrage dynamique (23) adaptés pour protéger les buses de la tour de pulvérisation, en filtrant l'eau de mer devant être alimentée vers les buses de la tour de pulvérisation, lesdits moyens de filtrage dynamique (23) étant reliés au système (10) d'élimination des matières microplastiques, ladite liaison étant adaptée pour alimenter les eaux de lavage à contre-courant provenant des moyens de filtrage dynamique (23) à un élément distributeur (12) du système (10) d'élimination des matières microplastiques, adapté pour distribuer les eaux de lavage à contre-courant entrantes sur la surface entière d'un premier élément filtrant (13) du système (10), ledit premier élément filtrant (13) ayant une maille de 500 à 2000 microns, adapté pour éliminer les matières microplastiques constituées de particules ayant une taille supérieure à 1-2 mm selon la maille dudit premier élément filtrant (13), ledit premier élément filtrant (13) étant positionné en série par rapport à un second élément filtrant (14) vers lequel il alimente les eaux filtrées, ledit second élément filtrant (14) ayant une maille de 10 à 50 microns, de préférence de 10 à 25 microns, adapté pour éliminer les matières microplastiques constituées de particules ayant une taille supérieure à 10-50 microns, en fonction de la maille du second élément filtrant (14), ledit second élément filtrant (14) étant relié à un conduit de sortie (15) des eaux filtrées, éventuellement en présence d'une pompe à vide d'aspiration (26).

4. Installation selon la revendication 3, dans laquelle la liaison entre le système de traitement des gaz d'échappement (20) et le système d'élimination des matières microplastiques (10) est une liaison directe via un ou plusieurs conduits ou dans laquelle au moins un conduit d'entrée (11) du système d'élimination des matières microplastiques (10) est positionné en aval de et relié à un conduit de sortie (25) du système de traitement des gaz d'échappement (20), ledit conduit de sortie (25) étant adapté pour transporter les eaux de lavage à contre-courant provenant des moyens de filtrage dynamique (24) du système de traitement des gaz d'échappement (20) vers ledit conduit d'entrée (11).

5. Installation selon la revendication 3, dans laquelle ledit premier élément filtrant (13) comprend une grille à rouleaux (16) métallique ou polymère, plus préférablement munie de systèmes de brosses d'aspirateur autonettoyants (17), reliés à des sacs de collecte (19).

6. Installation selon l'une quelconque des revendications 3 à 5, dans laquelle ledit second élément filtrant (14) consiste en un filtre à rouleaux (18) en matériau polymère, sous vide, relié à des sacs de collecte (19).

7. Installation selon l'une quelconque des revendications 3 à 6, dans laquelle ledit second élément filtrant (14) comprend des systèmes de nettoyage par brosses ou rouleaux, éventuellement perforés et avec injection d'air comprimé.
